# EUROPÄISCHE PATENTSCHRIFT

(11) **EP 3 105 379 B1**
(45) Veröffentlichungstag und Bekanntmachung des Hinweises auf die Patenterteilung: **23.10.2019**
(21) Anmeldenummer: 15703880.3
(22) Anmeldetag: 10.02.2015
(51) Int. Cl.: F16K 11/00, F16K 27/04, E03C 1/04

(54) **SANITÄRARMATUR**
PLUMBING FIXTURE
ROBINET SANITAIRE

(30) Priorität: 10.02.2014 DE 102014001602
(43) Veröffentlichungstag der Anmeldung: 21.12.2016
(73) Patentinhaber: Grohe AG, 58675 Hemer (DE)
(72) Erfinder: SCHLÜTER, Matthias, 44289 Dortmund (DE); LINKER, Natalia, 58675 Hemer (DE); STÖLZEL, Uwe, 58710 Menden (DE)
(86) Internationale Anmeldenummer: PCT/EP2015/000281
(87) Internationale Veröffentlichungsnummer: WO 2015/117766

(56) Entgegenhaltungen:
- EP-A1- 1 491 805
- EP-A2- 0 632 220
- CA-A1- 2 532 623
- KR-A- 20090 106 183
- US-A1- 2005 189 023

## Beschreibung

Die Erfindung betrifft eine Sanitärarmatur nach dem Oberbegriff des Patentanspruches 1.

Das Chassis (nachfolgend als Armaturengehäuse bezeichnet) einer solchen Sanitärarmatur kann beispielhaft aus Messing oder aus Zink gefertigt sein. In einem Messing-Armaturgehäuse werden in gängiger Praxis die Wasserwege zwischen den versorgungsseitigen Kalt- und Warmwasserleitungen sowie der zum Wasserauslauf führenden Mischwasserleitung unmittelbar beim Gießen des Messinggehäuses eingeformt. Demgegenüber werden bei einem Zink-Armaturgehäuse die Wasserwege in einem Kunststoff-Innenkörper integriert, der zusammen mit einer Mischkartusche als ein Gehäuseeinsatzteil im Armaturengehäuse eingesetzt ist. Auf diese Weise bleiben die Wasserwege gegenüber dem Zinkgehäuse kontaktfrei.

Eine gattungsgemäße Sanitärarmatur weist ein Armaturengehäuse auf, das an einem, in einer Gehäusewand ausgebildeten Durchlass in einen Seitenarm übergeht, der zu einem Wasserauslauf führt. Das Armaturengehäuse begrenzt innenseitig einen Innenraum, der über zum Beispiel eine bodenseitige Montageöffnung zugänglich ist. Beim werksseitigen Zusammenbau der Sanitärarmatur wird der Kunststoff-Innenkörper in einer Montagerichtung entlang einer Gehäuseachse in das Armaturengehäuse eingesetzt, und zwar zusammen mit der Mischkartusche. Eine, der bodenseitigen Montageöffnung gegenüberliegenden oberen Montageöffnung wird dabei von einer Gehäusekappe geschlossen, durch die ein Betätigungshebel der Mischkartusche nach außen geführt ist. Speziell bei komplexeren Bauteil-Geometrien des Armaturengehäuses gestaltet sich der Einbau des Kunststoff-Innenkörpers in das Armaturengehäuse montagetechnisch schwierig.

In EP0632220, KR1020090106183, CA2532623 sind Sanitärarmaturen offenbart. Inbesondere entspricht der Oberbegriff des Anspruchs 1 der EP0632220.

Als Gehäuseachse ist in der vorliegenden Anmeldung eine Schwenkachse zu verstehen, um die das Armaturengehäuse bei einer nutzerseitigen Schwenkbetätigung drehbar ist.

Alternativ oder zusätzlich ist unter der Gehäuseachse eine Flächennormale zu verstehen, die durch den Flächenschwerpunkt einer Querschnittsfläche durch die Armatur geht. Im Falle eines hohlzylindrischen Armaturengehäuses bildet dessen Mittelachse die Gehäuseachse.

Die Aufgabe der Erfindung besteht darin, eine kostengünstige Sanitärarmatur bereitzustellen, bei der der Wasserweg vom Metall des Armaturengehäuses getrennt wird, wodurch anstelle von Messing ein kostengünstigerer Zink-Druckguß verwendbar ist. Darüber hinaus besteht eine weitere Aufgabe darin, die Montage und Fertigung des Armaturengehäuses zu vereinfachen, und zwar speziell unter Anwendung eines kostengünstigen Zinkspritzgießprozesses.

Die Aufgabe ist durch die Merkmale des Patentanspruches 1 gelöst. Bevorzugte Weiterbildungen der Erfindung sind in den Unteransprüchen offenbart.

Gemäß dem kennzeichnenden Teil des Patentanspruches 1 weist das Armaturengehäuse ein lösbar gehaltertes Gehäuseteil auf. Beim Entfernen des Gehäuseteils vom Armaturengehäuse wird eine Aussparung freigelegt. Mittels der Aussparung ist der von der Montageöffnung des Armaturengehäuses bereitgestellte Montagezugang erweitert. Mit dem erweiterten Montagezugang wird der Einbau des Kunststoff-Innenkörpers in den Innenraum des Armaturengehäuses beträchtlich vereinfacht. Nach erfolgtem Zusammenbau wird das Gehäuseteil am Armaturengehäuse lösbar montiert.

Mit der Erfindung ist eine kostengünstige Sanitärarmatur bereitstellbar, bei der der Wasserweg vom Metall des Armaturengehäuses in einfacher Weise trennbar ist. Dadurch ist anstelle von Messing ein kostengünstigerer Zink-Druckguß verwendbar. Zudem kann mit der Erfindung die Montage und Fertigung des Armaturengehäuses vereinfacht werden, und zwar speziell unter Anwendung eines kostengünstigen Zinkspritzgießprozesses.

Auf diese Weise wird selbst bei komplexeren Bauteil-Geometrien des Armaturengehäuses ein einfacher werkseitiger Zusammenbau der Sanitärarmatur gewährleistet. Der von der Montageöffnung und der Aussparung bereitgestellte, erweiterte Montagezugang ist bevorzugt derart bemessen, dass der Kunststoff-Innenkörper frei von gehäuseseitigen Störkonturen in das Armaturengehäuse eingesetzt werden kann.

In einer speziellen Bauteil-Geometrie kann der Gehäusearm quer zur Montagerichtung radial nach außen vom Armaturengehäuse abragen. Der Gehäusearm ist dabei einstückig am Armaturengehäuse angeformt. Die Fertigung des Armaturengehäuses erfolgt beispielhaft in einem Gießverfahren. Besonders bevorzugt kann das Armaturengehäuse in einem Spritzgussverfahren aus Zink gefertigt sein.

Die Montageöffnung des Armaturengehäuses kann von einem bodenseitigen Gehäuserand begrenzt sein. Der seitlich abragende Gehäusearm kann hierbei mit einem vorgegebenen Axialabstand vom bodenseitigen Gehäuserand höhenversetzt sein, und zwar unter Bildung eines Inneneckbereiches zwischen der Gehäusewand und einer, dem Gehäuseboden zugewandten Unterseite des Gehäusearms. Die, den Montagezugang erweiternde Aussparung kann bevorzugt weitgehend sichtgeschützt in Axialrichtung in Flucht mit dem darüber angeordneten Gehäusearm positioniert sein.

In einer Ausführungsform kann die Aussparung einen ersten Abschnitt aufweisen, der sich vom bodenseitigen Gehäuserand in der Axialrichtung bis zum Inneneckbereich erstreckt. Zudem kann die Aussparung einen, am ersten Abschnitt anschließende zweiten Abschnitt aufweisen, der sich quer zur Axialrichtung an der Unterseite des Gehäusearms erstreckt.

Der vom Gehäusearm begrenzte Innenraum ist über den oben erwähnten Durchlass mit dem vom Armaturengehäuse begrenzten Innenraum in Verbindung. Der Gehäusearm-Innenraum kann von einer umlaufenden Seitenwand sowie einer Deckwand begrenzt sein, die beide unmittelbar an der Gehäusewandung des Armaturengehäuses angeformt sind. In einer Ausführungsform kann in der Deckwand des Gehäusearms ein Durchlass ausgebildet sein, über den die Mischwasserleitung im Wasserauslauf mit dem Mischwasserkanal im Innenkörper in flüssigkeitsdichter Steckverbindung bringbar ist. Diese Steckverbindung kann bevorzugt so ausgelegt sein, dass die Steckpartner sowohl abziehsicher als auch schwenkbar miteinander verbunden sind, wodurch ein Schwenkauslauf bereitstellbar ist.
Bevorzugt können der, die Aussparung begrenzende Gehäuserand und das lösbar gehalterte Gehäuseteil in etwa flächenbündig ineinander übergehen.

Zum Verschließen der oben beschriebenen Gehäuse-Aussparung kann das Gehäuseteil ein Winkelprofilteil sein, dessen erster Profilschenkel den ersten Abschnitt der Aussparung überdeckt, und dessen zweiter Profilschenkel die offene Unterseite des Gehäusearms überdeckt.

Um eine kontaktfreie Wasserführung im Armaturengehäuse zu gewährleisten, kann der in das Armaturengehäuse einsetzbare Kunststoff-Innenkörper einen seitlichen Fortsatz aufweisen, der im Gehäusearm des Armaturengehäuses positioniert ist.

Der zweite Profilschenkel des Gehäuseteils kann endseitig eine Anschlagkontur, etwa einen Randsteg mit reduzierter Materialstärke, aufweisen. Dieser ist in Zusammenbaulage in Formschlussverbindung mit einer Gegenkontur an der Seitenwand des Gehäusearms bringbar, insbesondere einer Hinterschneidung. Zudem kann der erste Profilschenkel des Gehäuseteils einen Montageabschnitt aufweisen, der mit dem Innenkörper verbindbar ist, insbesondere mittels einer Schraubverbindung.

Zur Bildung der oben erwähnten Steckverbindung kann der seitliche Fortsatz des Innenkörpers einen Anschlussnippel aufweisen. Dieser kann durch den im Gehäusearm ausgebildeten Durchlass ragen. Der Anschlussnippel begrenzt einen im Innenkörper ausgebildeten Mischwasserkanal. Im Zusammenbauzustand ist ein korrespondierendes Anschlussstück des Wasserauslaufes auf den Anschlussnippel des Innenkörpers aufgesteckt.

In einer technischen Realisierung kann der Mischwasserkanal im Innenkörper einen horizontalen, von der Mischkartusche wegführenden Kanalabschnitt aufweisen. An diesem schließt sich ein vertikaler Kanalabschnitt an, dessen Auslassöffnung in den Wasserauslauf mündet. Gegebenenfalls kann der vertikale Kanalabschnitt bis zum Anschlussnippel geführt sein. Der horizontale Kanalabschnitt sowie der vertikale Kanalabschnitt können unmittelbar beim Spitzgießen des Kunststoff-Innenkörpers geformt werden. In diesem Fall weist der horizontale Kanalabschnitt fertigungstechnisch bedingt eine außenseitige Kanalöffnung auf, die mit einem Verschlusselement, etwa einem Blindstopfen, schließbar ist. Im Zusammenbauzustand wird ein Ablösen des Blindstopfens durch die zylindrische Innenwandung des Armaturengehäuses betriebssicher verhindert.

Die vorstehend erläuterten und/oder in den Unteransprüchen wiedergegebenen vorteilhaften Aus-und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile sind nachfolgend anhand von Zeichnungen näher erläutert.

Es zeigen:
- Fig. 1: in einer perspektivischen Ansicht eine Sanitärarmatur;
- Fig. 2: die Sanitärarmatur in einer Explosionsdarstellung;
- Fig. 3: eine Schnittdarstellung der Sanitärarmatur;
- Fig. 4 und 5: jeweils Schnittansichten von Einzelheiten X und Y aus der Fig. 3; und
- Fig. 6: eine Schnittdarstellung der Sanitärarmatur entlang der Schnittebene A-A aus der Fig. 3.

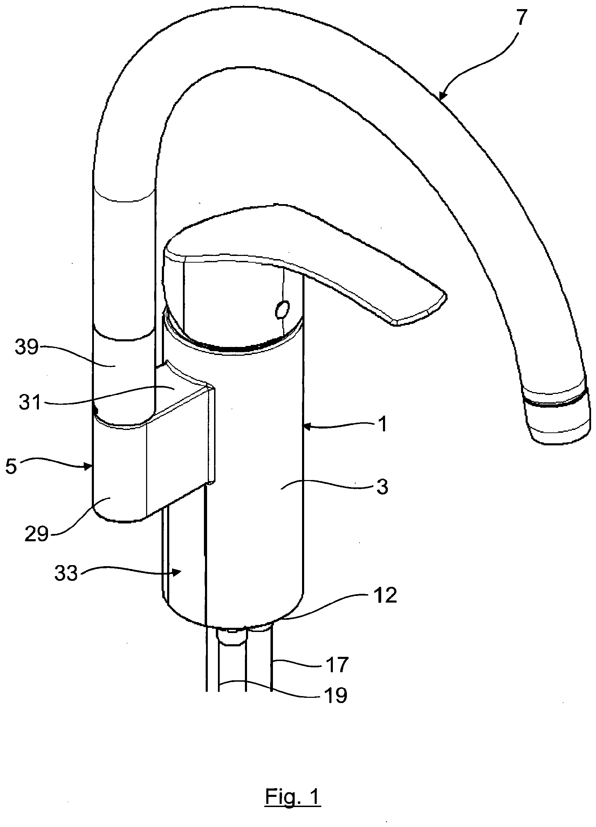

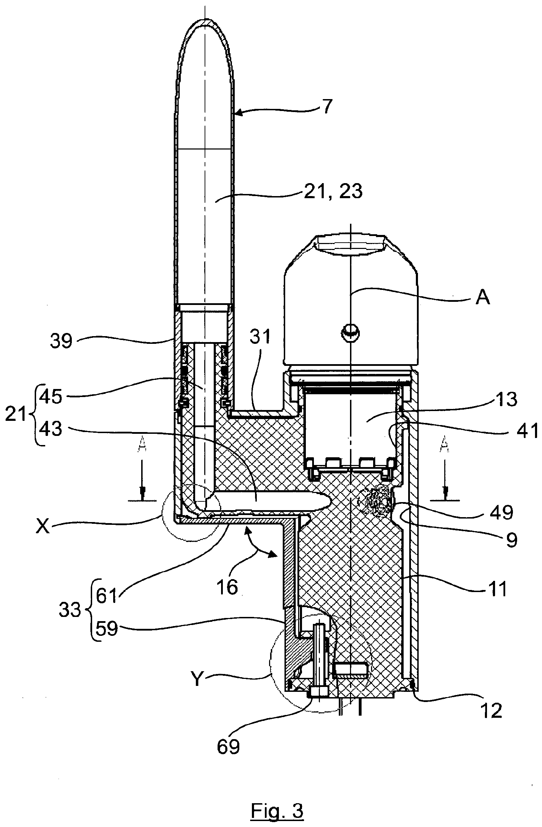

In der Fig. 1 ist eine Sanitärarmatur gezeigt, die ein hohlzylindrisches Armaturengehäuse 1 aufweist, an dessen zylindrischer Gehäusewandung 3 ein Gehäusearm 5 seitlich abragt. Der Gehäusearm 5 trägt an seinem radial äußeren Ende einen Wasserauslauf 7. Dieser ist um eine zur Gehäuseachse A (Fig. 3) achsparallele vertikale Achse schwenkbar.

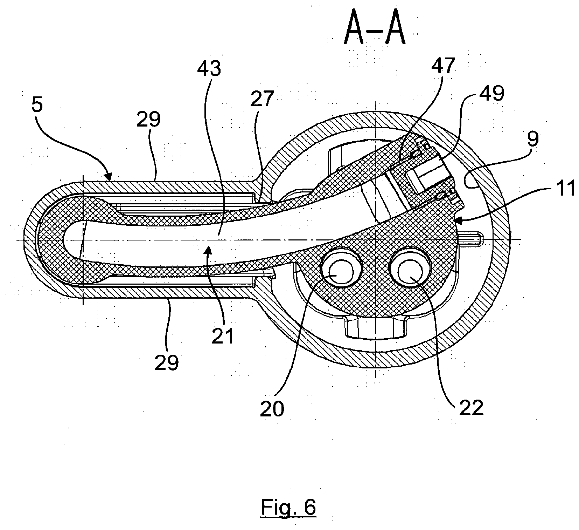

Das hohlzylindrische Armaturengehäuse 1 begrenzt gemäß der Fig. 3 einen Innenraum 9, in dem ein Kunststoff-Innenkörper 11 zusammen mit einer Mischkartusche 13 eingesetzt ist. Die Mischkartusche 13 weist einen nach oben aus dem Armaturengehäuse 1 herausgeführten Betätigungshebel 15 auf, bei dessen Betätigung eine an sich bekannte Temperatur- und/oder Mengeneinstellung des abfließenden Mischwassers erfolgt. Im Kunststoff-Innenkörper 11 sind nur in der Fig. 6 gezeigte Kalt- und Warmwasserkanäle 20, 22 integriert, die die versorgungsseitigen Kalt- und Warmwasserleitungen 17, 19 (Fig. 1) mit der Einlassseite der Mischkartusche 13 verbinden. Zudem ist im Kunststoff-Innenkörper 11 ein Mischwasserkanal 21 (Fig. 3 oder 6) integriert, der einen Mischwasserauslass der Mischkartusche 13 mit einer vom Wasserauslauf 7 begrenzten Mischwasserleitung 23 (Fig. 3) verbindet.

In den Figuren ist beispielhaft das Armaturengehäuse 1 zusammen mit dem daran einstückig angeformten Gehäusearm 5 im Spritzgußverfahren aus einem Zink-Material gefertigt. Demgegenüber kann der Wasserauslauf 7 beispielhaft aus Messing gefertigt sein.

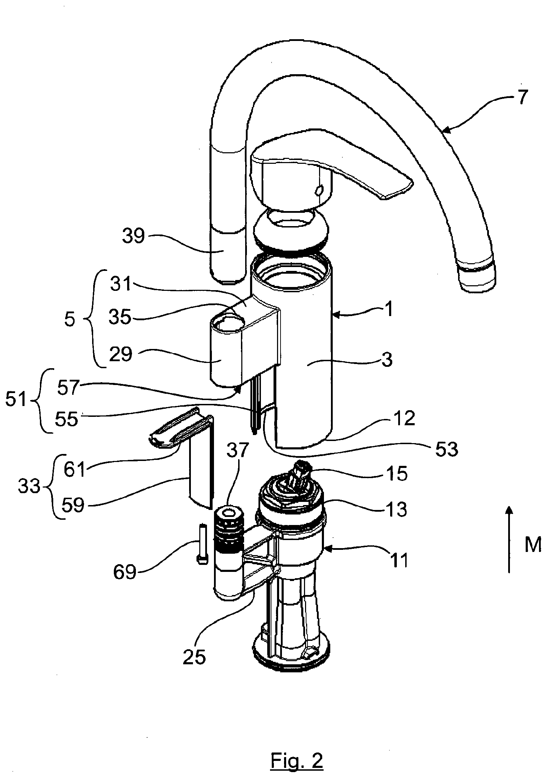

Wie aus der Fig. 3 weiter hervorgeht, weist der Innenkörper 11 einen seitlichen Fortsatz 25 (Fig. 2) auf, der durch einen, in der Gehäusewand 3 gebildeten Durchlass 27 (Fig. 6) in den Gehäusearm 5 einragt. Der Innenraum des Gehäusearms 5 ist gemäß den Figuren durch eine Seitenwandung 29 sowie eine Deckwand 31 begrenzt, die beide einstückig an der zylindrischen Gehäusewandung 3 des Armaturengehäuses 1 angeformt sind. Demgegenüber ist die Unterseite des Gehäusearms 5 offen gestaltet und mit einem später beschriebenen Gehäuseteil 33 abgedeckt.

In der Deckwand 31 des Gehäusearms 5 ist ein Durchlass 35 ausgebildet. Durch den Durchlass 35 ragt ein am Fortsatz 25 angeformter Anschlussnippel 37, der in einer flüssigkeitsdichten Steckverbindung mit einem Anschlussstück 39 des Wasserauslaufes 7 ist. Die beiden Steckpartner der Steckverbindung, das heißt der Anschlussnippel 37 sowie das auslaufseitige Anschlussstück 39, sind zueinander schwenkbar sowie abziehsicher verbunden.

Wie aus der Fig. 3 hervorgeht, ist die im Wesentlichen rotationssymmetrisch ausgebildete Mischkartusche 13 koaxial zur Gehäuseachse A in einer Aufnahme 41 des Kunststoff-Innenkörpers 11 eingesetzt. Der von der Mischkartusche 13 wegführende Mischwasserkanal 21 weist gemäß der Fig. 3 einen horizontalen Kanalabschnitt 43 und einen daran anschließenden vertikalen Kanalabschnitt 45 auf. Der vertikale Kanalabschnitt 45 ist durch den Anschlussnippel 37 geführt und in Verbindung mit der vom Wasserauslauf 7 begrenzten Mischwasserleitung 23. Der horizontale Kanalabschnitt 43 weist an seinem, dem vertikalen Kanalabschnitt 45 gegenüberliegenden Ende fertigungstechnisch bedingt eine außenseitige Kanalöffnung 47 auf, die mit einem Blindstopfen 49 verschlossen ist.

Im gezeigten Ausführungsbeispiel ist der Gehäusearm 5 mit einem Axialabstand vom bodenseitigen Gehäuserand 12 beabstandet, wobei zwischen der, dem Gehäuseboden zugewandten Unterseite des Gehäusearms 5 und der Gehäusewandung 3 ein Inneneckbereich 16 (Fig. 3) gebildet ist, der hier beispielhaft einen Winkel von 90° aufspannt.

Wie aus der Fig. 2 hervorgeht, ist das Armaturengehäuse 1 mehrteilig aufgebaut, und zwar mit dem bereits oben erwähnten zusätzlichen, separaten Gehäuseteil 33. In der Fig. 2 ist das Gehäuseteil 33 vom Armaturengehäuse 1 entfernt. Dadurch ist eine Aussparung 51 freigelegt, mit der ein von der bodenseitigen Montageöffnung 53 des Armaturengehäuses 1 bereitgestellter Montagezugang erweiterbar ist. Die Aussparung 51 weist einen ersten Abschnitt 55 auf, der sich vom bodenseitigen Gehäuserand 12 in der Axialrichtung bis zum Inneneckbereich 16 erstreckt. Ein daran anschließender zweiter Abschnitt 57 der Aussparung 51 erstreckt sich quer zur Axialrichtung an der Unterseite des Gehäusearms 5.

Das Gehäuseteil 33 ist gemäß den Figuren ein Winkelprofilteil mit einem ersten Profilschenkel 59, der den ersten Abschnitt 55 der Aussparung 51 an der Gehäusewandung 3 überdeckt. Der zweite Profilschenkel 61 überdeckt dagegen den zweiten Abschnitt 57 der Aussparung 51 an der Unterseite des Gehäusearms 5. Das Gehäuseteil 33 ist dabei so ausgelegt, dass ein in etwa flächenbündiger Übergang zum angrenzenden Gehäuserand gewährleistet ist.

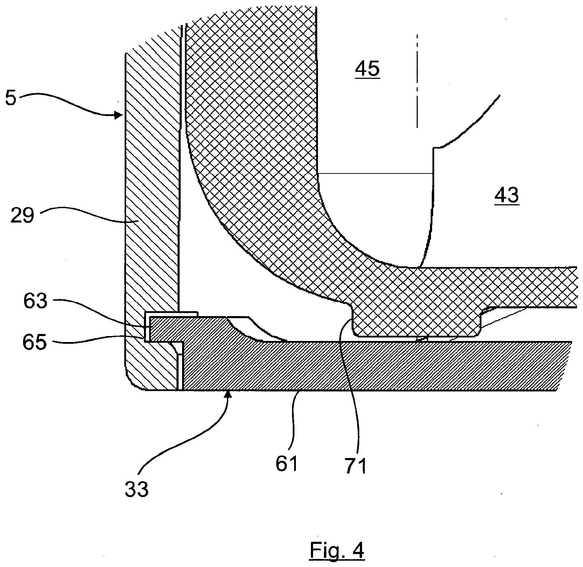

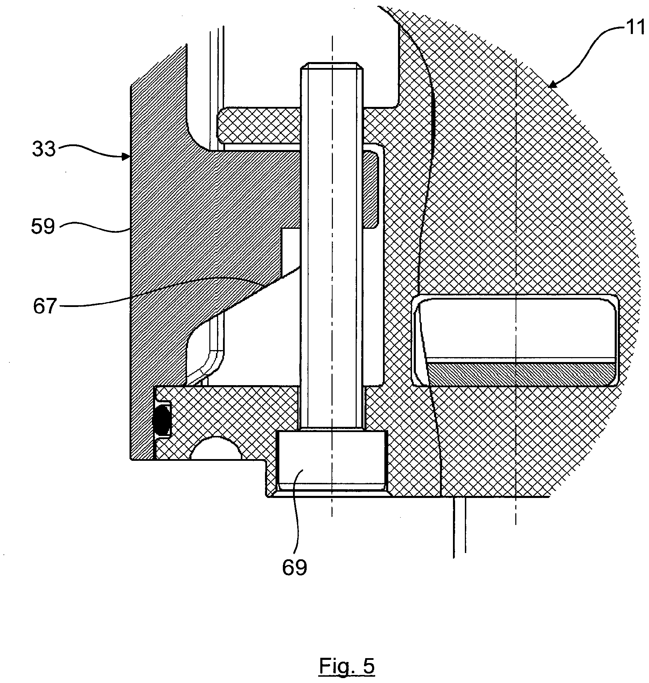

Für eine betriebssichere Halterung weist der zweite Profilschenkel 61 des Gehäuseteils 33 endseitig einen materialreduzierten Randsteg 63 auf. Der Randsteg 63 ist gemäß der Fig. 4 in einer Hinterschneidung 65 der Seitenwand 29 des Gehäusearms 5 eingesetzt. Demgegenüber ist gemäß der Fig. 5 am vertikalen, ersten Profilschenkel 59 des Gehäuseteils 33 auf der, den Innenkörper 11 zugewandten Seite ein Montageabschnitt 67 vorgesehen. Dieser ist gemäß der Fig. 3 oder 5 mit einer Spannschraube 69 am Kunststoff-Innenkörper 11 verschraubt.

Bei einer werksseitigen Montage der Sanitärarmatur wird zunächst die Mischkartusche 13 in die Aufnahme 41 des Kunststoff-Innenkörpers 11 eingesetzt. Anschließend wird der Kunststoff-Innenkörper 11 in einer Montagerichtung M (Fig. 2) entlang der Gehäuseachse A des Armaturengehäuses 1 in den Innenraum 9 des Armaturengehäuses 1 eingeschoben. Der von der Aussparung 51 und der Montageöffnung 53 bereitgestellte Montagezugang ist dabei derart bemessen, dass der Kunststoff-Innenkörper 11 frei von gehäuseseitigen Störkonturen montagetechnisch einfach einsetzbar ist.

Nach erfolgter Positionierung im Armaturengehäuse wird das Gehäuseteil 33 mit seinem endseitigen Randsteg 63 in Ansatz mit der gehäuseseitigen Hinterschneidung 65 gebracht und am Kunststoff-Innenkörper 11 verschraubt. Gemäß der Fig. 4 weist der Kunststoff-Innenkörper 11 an seiner, den zweiten Profilschenkel 61 des Gehäuseteils 33 zugewandten Seite ein Widerlager 71 auf. Beim Anbau des Gehäuseteils 33 wird über das Widerlager 71 eine Vorspannung auf das Gehäuseteil 33 gebracht, um eine spielfreie Halterung des Gehäuseteils 33 zu gewährleisten.

**Bezugszeichenliste**

| | | | |
|---|---|---|---|
| 1 | Armaturengehäuse | 51 | Aussparung |
| 3 | Gehäusewandung | 53 | Montageöffnung |
| 5 | Gehäusearm | 55 | erster Abschnitt |
| 7 | Wasserauslauf | 57 | zweiter Abschnitt |
| 9 | Innenraum | 59 | erster Profilschenkel |
| 11 | Kunststoff-Innenkörper | 61 | zweiter Profilschenkel |
| 12 | bodenseitiger Gehäuserand | 63 | Randsteg |
| 13 | Mischkartusche | 65 | Hinterschneidung |
| 15 | Betätigungshebel | 67 | Montageabschnitt |
| 16 | Inneneckbereich | 71 | Widerlager |
| 17, 19 | Warmwasser- und Kaltwasserleitungen | A | Gehäuseachse |
| | | M | Montagerichtung |
| 20, 21, 22 | Wasserkanäle | | |
| 23 | Mischwasserleitung | | |
| 25 | Fortsatz | | |
| 27 | Durchlass | | |
| 29 | Seitenwand | | |
| 31 | Deckwand | | |
| 33 | Gehäuseteil | | |
| 35 | Durchlass | | |
| 37 | Anschlussnippel | | |
| 39 | Anschlussstück | | |
| 41 | Aufnahme | | |
| 43 | horizontaler Kanalabschnitt | | |
| 45 | vertikaler Kanalabschnitt | | |
| 47 | Kanalöffnung | | |
| 49 | Blindstopfen | | |

## Patentansprüche

1. Sanitärarmatur mit einem Armaturengehäuse (1), das einen Innenraum (9) begrenzt, der an einem in einer Gehäusewand (3) ausgebildeten Durchlass (27) in einen zu einem Wasserauslauf (7) führenden Gehäusearm (5) übergeht, welches Armaturengehäuse (1) eine Montageöffnung (53) aufweist, durch die in einer Montagerichtung (M) entlang einer Gehäuseachse (A) ein Innenkörper (11) einsetzbar ist, dessen Kalt-, Warm- und Mischwasserkanäle (20, 21, 22) die versorgungsseitigen Kalt- und Warmwasserleitungen (17, 19) und eine zum Wasserauslauf (7) führende Mischwasserleitung (23) mit einer Mischkartusche (13) strömungstechnisch verbinden, wobei das Armaturengehäuse (1) ein lösbar gehaltertes Gehäuseteil (33) aufweist, bei dessen Entfernung eine Aussparung (51) freigelegt ist, mit der der von der Montageöffnung (53) des Armaturengehäuses (1) bereitgestellte Montagezugang erweiterbar ist, **dadurch gekennzeichnet, dass** der vom Gehäusearm (5) begrenzte Innenraum von einer umlaufenden Seitenwand (29) und einer Deckwand (31) begrenzt ist, und dass in der Deckwand (31) des Gehäusearms (5) ein Durchlass (35) ausgebildet ist, über den die Mischwasserleitung (23) im Wasserauslauf (7) mit dem Mischwasserkanal (21) im Innenkörper (11) in flüssigkeitsdichte Steckverbindung bringbar ist, wobei die Steckpartner (37, 39) der Steckverbindung abziehsicher und schwenkbar miteinander verbunden sind, wobei das lösbar am Armaturengehäuse (1) gehalterte Gehäuseteil (33) ein Winkelprofilteil ist, und zwar mit einem ersten Profilschenkel (59), der den ersten Abschnitt (55) der Aussparung (51) überdeckt, und einem zweiten Profilschenkel (61), der die offene Unterseite des Gehäusearms (5) überdeckt und wobei der in das Armaturengehäuse (1) einsetzbare Innenkörper (11) einen seitlichen Fortsatz (25) aufweist, der im Gehäusearm (5) des Armaturengehäuses (1) positionierbar ist.

2. Sanitärarmatur nach Anspruch 1, **dadurch gekennzeichnet, dass** der von der Montageöffnung (53) und der Aussparung (51) bereitgestellte Montagezugang derart bemessen ist, dass der Innenkörper (11) frei von gehäuseseitigen Störkonturen einsetzbar ist.

3. Sanitärarmatur nach Anspruch 1 oder 2, **dadurch gekennzeichnet, dass** der Gehäusearm (5) quer zur Montageeinrichtung (M) radial nach außen vom Armaturengehäuse (1) abragt, und/oder dass der Gehäusearm (5) einstückig am Armaturengehäuse (1) angeformt ist.

4. Sanitärarmatur nach einem der vorhergehenden Ansprüche, **dadurch gekennzeichnet, dass** die Montageöffnung (53) von einem bodenseitigen Gehäuserand (12) begrenzt ist, und dass insbesondere der Gehäusearm (5) mit einem Axialabstand vom bodenseitigen Gehäuserand (12) beabstandet ist und von der Gehäusewand (3) abragt, und zwar unter Bildung eines Inneneckbereichs (16) zwischen der Gehäusewand (3) und einer, dem Gehäuseboden zugewandten Unterseite des Gehäusearms (5).

5. Sanitärarmatur nach einem der vorhergehenden Ansprüche, **dadurch gekennzeichnet, dass** die Aussparung (51) in Axialrichtung in Flucht mit dem Gehäusearm (5) angeordnet ist.

6. Sanitärarmatur nach einem der vorhergehenden Ansprüche, **dadurch gekennzeichnet, dass** die Aussparung (51) einen ersten Abschnitt (55) aufweist, der sich vom bodenseitigen Gehäuserand (12) in Axialrichtung bis zum Inneneckbereich (16) erstreckt, und einen daran anschließenden zweiten Abschnitt (57) aufweist, der sich quer zur Axialrichtung an der Unterseite des Gehäusearms (5) erstreckt.

7. Sanitärarmatur nach Anspruch 1, **dadurch gekennzeichnet, dass** der zweite Profilschenkel (61) des Gehäuseteils (33) endseitig eine Anschlagkontur (63), insbesondere einen Randsteg, aufweist, der in Formschlussverbindung mit einer Gegenkontur (65) an der Seitenwand (29) des Gehäusearms (5) bringbar ist, insbesondere einer Hinterschneidung.

8. Sanitärarmatur nach einem der Ansprüche 1 oder 7, **dadurch gekennzeichnet, dass** der erste Profilschenkel (59) des Gehäuseteils (33) einen Montageabschnitt (67) aufweist, der mit dem Innenkörper (11) verbindbar ist, insbesondere verschraubbar ist.

9. Sanitärarmatur nach einem der Ansprüche 1, 7 oder 8, **dadurch gekennzeichnet, dass** zur Bildung der Steckverbindung der seitliche Fortsatz (25) des Innenkörpers (11) einen Anschlussnippel (37) aufweist, der durch den im Gehäusearm (5) ausgebildeten Durchlass (35) ragt, und auf den ein Anschlussstück (39) des Wasserauslaufs (7) aufsteckbar ist.

10. Sanitärarmatur nach Anspruch 9, **dadurch gekennzeichnet, dass** der Mischwasserkanal (21) im Innenkörper (11) einen horizontalen, von der Mischkartusche (13) wegführenden Kanalabschnitt (43) aufweist, und einen daran anschließenden vertikalen Kanalabschnitt (45), der bis zum Anschlussnippel (37) geführt ist.

11. Sanitärarmatur nach Anspruch 10, **dadurch gekennzeichnet, dass** der horizontale Kanalabschnitt (43) fertigungstechnisch bedingt eine außenseitige Kanalöffnung (47) aufweist, die mit einem Verschlusselement (49) geschlossen ist.

## Claims

1. A plumbing fixture having a fixture housing (1), which delimits an interior space (9) which transitions, at a passage (27) formed in a housing wall (3), into a housing arm (5) leading to a water spout (7), which fixture housing (1) has a mounting hole (53) through which an inner body (11) can be inserted in a mounting direction (M) along a housing axis (A), the cold, hot and mixing water channels (20, 21, 22) of which body fluidically connect the supply-side cold and hot water pipes (17, 19) and a mixing water pipe (23) leading to the water spout (7) to a mixing cartridge (13), wherein the fixture housing (1) has a detachably supported housing part (33), the removal of which exposes an aperture (51) with which the mounting access provided by the mounting hole (53) of the fixture housing (1) can be widened, **characterized in that** the interior space delimited by the housing arm (5) is delimited by a surrounding side wall (29) and a top wall (31) and that a passage (35) is formed in the top wall (31) of the housing arm (5), via which the mixing water pipe (23) in the water spout (7) can be brought into fluid-tight plug-in connection with the mixing water channel (21) in the inner body (11), wherein the mating plug parts (37, 39) of the plug-in connection are interconnected in such a way that they cannot be pulled apart and are capable of pivoting, wherein the housing part (33) detachably supported on the fixture housing (1) is an angle profile part having a first profile leg (59), which covers the first section (55) of the aperture (51), and a second profile leg (61), which covers the open underside of the housing arm (5), and wherein the inner body (11) capable of being inserted in the fixture housing (1) has a lateral extension (25), which can be positioned in the housing arm (5) of the fixture housing (1).

2. The plumbing fixture according to Claim 1, **characterized in that** the mounting access provided by the mounting hole (53) and the aperture (51) is dimensioned in such a way that the inner body (11) can be inserted free of housing-side interfering contours.

3. The plumbing fixture according to Claim 1 or 2, **characterized in that** the housing arm (5) projects radially outwards from the fixture housing (1) transversely to the mounting device (M), and/or that the housing arm (5) is formed integrally on the fixture housing (1).

4. The plumbing fixture according to any one of the preceding claims, **characterized in that** the mounting hole (53) is delimited by a bottom housing edge (12), and that in particular the housing arm (5) is spaced at an axial distance from the bottom housing edge (12) and projects from the housing wall (3), forming an inner corner region (16) between the housing wall (3) and an underside of the housing arm (5) facing the housing bottom.

5. The plumbing fixture according to any one of the preceding claims, **characterized in that** the aperture (51) is arranged in an axial direction, in alignment with the housing arm (5).

6. The plumbing fixture according to any one of the preceding claims, **characterized in that** the aperture (51) has a first section (55), which extends from the bottom housing edge (12) in an axial direction to the inner corner region (16), and an adjoining second section (57), which extends transversely to the axial direction on the underside of the housing arm (5).

7. The plumbing fixture according to Claim 1, **characterized in that** the second profile leg (61) of the housing part (33) has a stop contour (63), in particular an edge flange, on its end, which can be positively locked with a mating contour (65), in particular an undercut, on the side wall (29) of the housing arm (5).

8. The plumbing fixture according to one of Claims 1 or 7, **characterized in that** the first profile leg (59) of the housing part (33) has a mounting section (67), which can be connected, in particular screwed, to the inner body (11).

9. The plumbing fixture according to one of Claims 1, 7 or 8, **characterized in that** for forming the plug-in connection, the lateral extension (25) of the inner body (11) has a connection fitting (37), which projects through the passage (35) formed in the housing arm (5) and onto which a connecting piece (39) of the water spout (7) can be fitted.

10. The plumbing fixture according to Claim 9, **characterized in that** the mixing water channel (21) in the inner body (11) has a horizontal channel section (43) leading away from the mixing cartridge (13) and an adjoining vertical channel section (45), which is guided to the connection fitting (37).

11. The plumbing fixture according to Claim 10, **characterized in that** because of the manufacturing process used, the horizontal channel section (43) has an outside channel opening (47), which is closed by a closing element (49).

## Revendications

1. Robinetterie sanitaire, pourvue d'un corps de robinetterie (1), qui délimite un espace intérieur (9) qui sur un passage (27) conçu dans une paroi du corps (3) passe dans un bras de corps (5) menant vers une sortie d'eau (7), lequel corps de robinetterie (1) comporte un orifice de montage (53) dans lequel un corps intérieur (11) est insérable dans une direction de montage (M), le long d'un axe du corps (A), dont les canalisations d'eau froide, chaude et mélangée (20, 21, 22) relient fluidiquement les conduits d'eau froide et chaude (17, 19) du coté alimentation et un conduit d'eau mélangée (23) menant vers la sortie d'eau (7) avec une cartouche mélangeuse (13), le corps de robinetterie (1) comportant une pièce de corps (33) maintenue de manière amovible, dont le retrait libère une encoche (51) permettant d'évaser l'accès de montage mis à disposition par l'orifice de montage (53) du corps de robinetterie (1), **caractérisée en ce que** l'espace intérieur délimité par le bras de corps (5) est délimité par une paroi latérale (29) périphérique et par une paroi de recouvrement (31) et **en ce que** dans la paroi de recouvrement (31) du bras de corps (5) est conçu un passage (35), par l'intermédiaire duquel le conduit d'eau mélangée (23) dans la sortie d'eau (7) est susceptible d'être amené en liaison par enfichage étanche au liquide avec la canalisation d'eau mélangée (21) dans le corps intérieur (11), les partenaires enfichables (37, 39) de la liaison par enfichage étant reliés l'un à l'autre de manière résistant à l'arrachement et à pouvoir pivoter, la pièce de corps (33) maintenue de manière amovible sur le corps de robinetterie (1) étant une pièce en cornière et à savoir, pourvue d'une première branche de profilé (59) qui recouvre la première partie (55) de l'encoche (51) et d'une deuxième branche de profilé (61), qui recouvre la face inférieure ouverte du bras de corps (5) et le corps intérieur (11) insérable dans le corps de robinetterie (1) comportant un prolongement (25) latéral qui est positionnable dans le bras de corps (5) du corps de robinetterie (1).

2. Robinetterie sanitaire selon la revendication 1, **caractérisée en ce que** l'accès de montage mis à disposition par l'orifice de montage (53) et l'encoche (51) est dimensionné de telle sorte que le corps intérieur (11) soit insérable en étant libre de contours gênants du côté du corps.

3. Robinetterie sanitaire selon la revendication 1 ou 2, **caractérisée en ce que** le bras de corps (5) saillit à la transversale de la direction de montage (M), vers l'extérieur en direction radiale, à partir du corps de robinetterie (1) ; et/ou **en ce que** le bras de corps (5) est surmoulé en monobloc sur le corps de robinetterie (1).

4. Robinetterie sanitaire selon l'une quelconque des revendications précédentes, **caractérisée en ce que** l'orifice de montage (53) est délimité par un bord de corps (12) du côté du fond inférieur et **en ce que** notamment le bras de corps (5) est écarté d'un écart axial du bord de corps (12) du côté du fond inférieur et saillit à partir de la paroi du corps (3), et à savoir en formant une zone d'angle intérieur (16) entre la paroi du corps (3) et une face inférieure du bras de corps (5) dirigée vers le fond inférieur de corps.

5. Robinetterie sanitaire selon l'une quelconque des revendications précédentes, **caractérisée en ce que** l'encoche (51) est placée en alignement en direction axiale avec le bras de corps (5).

6. Robinetterie sanitaire selon l'une quelconque des revendications précédentes, **caractérisée en ce que** l'encoche (51) comporte une première partie (55), qui s'étend à partir du bord de corps (12) du côté du fond inférieur dans la direction axiale jusqu'à la zone d'angle intérieur (16), et comporte une deuxième partie (57) qui s'y raccorde, qui s'étend à la transversale de la direction axiale sur la face inférieure du bras de corps (5).

7. Robinetterie sanitaire selon la revendication 1, **caractérisée en ce que** la deuxième branche de profilé (61) de la pièce de corps (33) comporte sur son extrémité un contour de butée (63), notamment une barrette marginale, qui est susceptible d'être amenée en liaison par complémentarité de forme avec un contour antagoniste (65) sur la paroi latérale (29) du bras de corps (5), notamment une contre-dépouille.

8. Robinetterie sanitaire selon l'une quelconque des revendications 1 ou 7, **caractérisée en ce que** la première branche de profilé (59) de la pièce de corps (33) comporte une section de montage (67) qui est susceptible d'être reliée, notamment vissée avec le corps intérieur (11).

9. Robinetterie sanitaire selon l'une quelconque des revendications 1, 7 ou 8, **caractérisée en ce que** pour créer la liaison par enfichage, le prolongement (25) latéral du corps intérieur (11) comporte un raccord de connexion (37) qui saillit à travers le passage (35) conçu dans le bras de corps (5) et sur lequel est emboîtable une pièce de raccord (39) de la sortie d'eau (7).

10. Robinetterie sanitaire selon la revendication 9, **caractérisée en ce que** la canalisation d'eau mélangée (21) dans le corps intérieur (11) comporte un tronçon de canalisation (43) horizontal, s'éloignant de la cartouche mélangeuse (13), et un tronçon de canalisation (45) vertical qui s'y raccorde, qui est tiré jusqu'au raccord de connexion (37).

11. Robinetterie sanitaire selon la revendication 10, **caractérisée en ce qu'**à des fins de fabrication, le tronçon de canalisation (43) horizontal comporte un orifice externe de canalisation (47) qui est fermé par un élément d'obturation (49).
